(19) Europäisches Patentamt
European Patent Office
Office européen des brevets

(11) **EP 2 106 081 A2**

(12) **DEMANDE DE BREVET EUROPEEN**

(43) Date de publication:
**30.09.2009 Bulletin 2009/40**

(51) Int Cl.:
***H04L 25/03*** *(2006.01)* ***H04B 3/32*** *(2006.01)*

(21) Numéro de dépôt: **09155906.2**

(22) Date de dépôt: **23.03.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**
Etats d'extension désignés:
**AL BA RS**

(30) Priorité: **28.03.2008 FR 0852041**

(71) Demandeur: **FRANCE TELECOM**
**75015 Paris (FR)**

(72) Inventeurs:
• **Ouzzif, Meryem**
**22300, LANNION (FR)**
• **Le Masson, Jérôme**
**22300, LANNION (FR)**
• **Wahibi, Issam**
**1070, ANDERLECHT (FR)**

(54) **Procédé de traitement des interférences dans un système xdsl**

(57)     L'invention concerne un procédé de traitement d'interférences affectant N signaux respectivement émis par N terminaux appartenant à un réseau de communication, lesdits N signaux émis formant les composantes d'un vecteur s, ledit procédé comprenant au moins une phase d'estimation des composantes du vecteur s, comprenant au moins une première étape d'estimation au cours de laquelle au moins une composante du vecteur s est estimée en fonction d'au moins une autre composante du vecteur s estimée préalablement, ledit procédé comprend en outre :

- au moins une étape de changement d'une base vectorielle dans laquelle est exprimé le vecteur s, préalablement à au moins une deuxième étape d'estimation des composantes du vecteur s,
- une étape de sélection d'au moins une composante du vecteur s estimée au cours de l'une desdites étapes d'estimation ;
- une étape de reconstitution du vecteur s traité à partir desdites composantes sélectionnées.

**Fig. 1**

EP 2 106 081 A2

**Description**

L'invention concerne le domaine technique des transmissions de signaux dans des canaux d'un même système de transmission.

Dans les réseaux d'accès, il est connu d'utiliser des techniques de transmission de données de type DSL (pour Digital Subscriber Line, ou ligne numérique d'abonné en français). De telles techniques utilisent une modulation multi-porteuses de type DMT (pour Discrete MultiTone, ou multitonalité discrète en français).

Dans un réseau d'accès sur paire de cuivre, chaque ligne active constitutive du câble relie un multiplexeur, disposé par exemple au niveau d'un noeud d'accès, à un utilisateur final situé en aval du noeud d'accès. Pour un ensemble d'utilisateurs finaux donnés, les lignes actives peuvent être regroupées dans un seul câble et être connectées à la sortie d'un premier multiplexeur. Ces lignes actives sont gérées par un premier opérateur en télécommunications. Tandis que d'autres lignes actives du même câble peuvent être gérées par au moins un autre opérateur en télécommunication et être connectées à un autre multiplexeur DSLAM lui aussi situé au niveau du noeud d'accès.

Dans la suite, on appelle « système de transmission » les lignes actives gérées par un opérateur de télécommunication donné à l'intérieur d'une gaine et circulant jusqu'à un même multiplexeur.

Les signaux d'un même câble sont tous transmis dans une étroite bande de fréquence donnée.

Si l'on considère une ligne active d'un câble, les signaux transmis par les autres lignes actives du câble provoquent des interférences engendrant un bruit qui perturbe les signaux transmis sur la ligne active et diminue le débit de transmission pour cette ligne active.

Un tel bruit est particulièrement difficile à éliminer quand il est généré par les canaux externes au système de transmission, pour lesquels l'opérateur du système ne possède aucune information.

On connaît une méthode de traitement des interférences dans un système DSL. La méthode comprend une première phase de traitement de blanchiment des bruits externes au système de transmission et une deuxième phase de traitement simultané des interférences internes au système et des interférences engendrées lors de la phase de blanchiment.

La première phase comprend, par exemple, une étape de décomposition de Cholesky d'une matrice $R_{n'\,n'}$ de corrélation spatiale de bruits (bruits externes au système plus bruit blanc, on considère qu'il n'y a pas de bruits internes au système) présents sur les lignes actives du système de transmission considéré, exprimant la corrélation entre les différentes sources de bruit. Il comprend également une étape de multiplication du signal reçu par l'inverse d'une matrice $G$ issue de la décomposition de Cholesky de la matrice R de corrélation spatiale de bruit.

La deuxième phase comprend ensuite une étape de décomposition, selon la méthode QR, du produit de la matrice de canal par l'inverse de la matrice $G$ en un produit d'une matrice triangulaire $R$ et d'une matrice orthogonale $Q$. Le procédé comprend ensuite une étape d'annulation du bruit.

Avec une telle méthode, une valeur du signal émis par le terminal qui est désigné par « $N^{ième}$ terminal », est estimée uniquement en fonction du signal reçu, alors qu'une valeur du signal émis par le terminal désigné par « $1^{er}$ terminal » est estimée en fonction du signal reçu, et en fonction de tous les autres signaux déjà estimés ($N^{ième}$, $N-1^{ème,}...,2^{ème}$).

Une telle estimation s'avère suffisante pour le signal émis par le $1^{er}$ terminal, car il bénéficie des estimations des signaux émis par les autres terminaux. La ligne active correspondante présente alors une qualité de service satisfaisante, notamment quant au débit.

Toutefois, les inventeurs de la présente demande de brevet se sont aperçus que les lignes actives associées à des terminaux de rang élevé tel que le terminal N ne présentent pas une qualité de service suffisante.

L'invention palie cet inconvénient en proposant un procédé de traitement d'interférences affectant N signaux respectivement émis par N terminaux appartenant à un réseau de communication, lesdits N signaux émis formant les composantes d'un vecteur s, ledit procédé comprenant au moins une phase d'estimation des composantes du vecteur s, comprenant au moins une première étape d'estimation au cours de laquelle au moins une composante du vecteur s est estimée en fonction d'au moins une autre composante du vecteur s estimée préalablement.

Un tel procédé comprend en outre :

- au moins une étape de changement d'une base vectorielle dans laquelle est exprimé le vecteur s, préalablement à au moins une deuxième étape d'estimation des composantes du vecteur s,
- une étape de sélection d'au moins une composante du vecteur s estimée au cours de l'une desdites étapes d'estimation ;
- une étape de reconstitution du vecteur s traité à partir desdites composantes sélectionnées.

On exprime le vecteur s représentent les signaux émis dans au moins deux bases vectorielles distinctes, le vecteur s exprimé dans une première des bases étant liés par des relations connues au vecteur s exprimé dans la deuxième base. L'estimation des composantes du vecteur s est effectuée ensuite dans chacune des bases vectorielle.

Les composantes estimées le moins précisément dans la première base vectorielle sont différentes de celles estimées le moins précisément dans la deuxième base vectorielle, lorsque les deux bases vectorielles sont choisies judicieusement. Ainsi, on dispose de plusieurs estimations distinctes du même vecteur s et on peut choisir, pour chaque coordonnée du vecteur s, l'estimation la meilleure.

Le nombre de bases vectorielles utilisées pour l'estimation peut évidemment être modulé selon les paramètres liés à la transmission pour que toutes les coordonnées soient estimées de façon suffisamment précise et, par conséquent, pour que tous les canaux présentent une qualité de service suffisante.

L'invention reconstitue donc le vecteur s en améliorant les performances globales des lignes actives du système de transmission, notamment en fournissant à chaque terminal un débit satisfaisant pour la transmission.

Dans un mode de réalisation particulier, la deuxième étape d'estimation porte sur un vecteur s modifié dans lequel une desdites composantes a été remplacée par ladite composante correspondante sélectionnée.

Cette estimation est effectuée selon la formule:

$$\hat{s}_k = \frac{1}{a_{k,k}}\left(\hat{y}_k - \sum_{j=k+1}^{N} a_{k,j}\hat{s}_j\right),$$

qui permet d'estimer facilement les valeurs des différentes composantes du vecteur s. Dans cette formule,

- $\hat{s}_k$ est la composante correspondant au signal émis par le k$^{ème}$ terminal du système,
- $\hat{y}_k$ est le signal reçu par le multiplexeur et correspondant au signal émis par le k$^{éme}$ terminal du système et traité mathématiquement, et
- $a_{k,j}$ sont les coefficients d'une matrice de traitement déterminée.

Ainsi, il est possible de préciser et d'améliorer l'estimation des composantes du vecteur s. En remplaçant une composante du vecteur s par la composante sélectionnée à l'issue de la première étape d'estimation, on obtient une estimation plus précise des composantes du vecteur s.

Avantageusement lesdites bases vectorielles sont choisies en fonction de paramètres relatifs à une qualité de service demandée pour lesdits signaux émis.

De cette façon, on évite de déterminer des bases vectorielles de façon automatique, si, pour la qualité de service demandée par un terminal, une estimation déjà effectuée est suffisante.

Dans un mode de réalisation particulier, une étape d'estimation desdites composantes comprend

- une première étape d'élimination des interférences internes au système affectant lesdites composantes, et
- une deuxième étape d'élimination des interférences entre le système et au moins un perturbateur externe affectant lesdites composantes.

Par « perturbateur externe », on entend non seulement des terminaux externes au système mais également d'autres types de perturbateur, émettant des signaux d'un autre type que ceux du système (par exemple des signaux radiofréquence) et interférant avec les signaux du système. Ainsi, avant d'effectuer l'estimation du vecteur s, on agit sur le vecteur s reçu pour faire en sorte que la part du bruit dans le vecteur s estimé soit la plus négligeable possible et que l'estimation des composantes du vecteur s soit la plus précise possible.

Optionnellement, le procédé comprend une étape de décomposition de Cholesky d'une matrice de corrélation spatiale de bruit des signaux reçus, la deuxième étape de traitement comprenant une étape de multiplication par l'inverse de la matrice issue de la décomposition de Cholesky du vecteur s reçu.

On sait qu'une matrice de corrélation spatiale de bruit exprime les lois statistiques liant les bruits provenant de différentes sources, c'est-à-dire l'influence que les différents bruits ont les uns sur les autres. Une décomposition de Cholesky d'une matrice donnée $M$ est l'expression de cette matrice selon la formule $M = G \times G^H$ où $G$ est une matrice triangulaire supérieure et $G^H$ est le transconjugé de la matrice $G$, c'est-à-dire la transposée de la matrice $G$ dans laquelle on a remplacé tous les nombres complexes par leurs conjugués. Un tel traitement permet de décorréler les différentes sources de bruit.

Avantageusement, la deuxième étape de traitement comprend une étape de décomposition d'une matrice représentant la réponse du système en un produit d'une matrice triangulaire supérieure et d'une matrice orthogonale. Ces différentes techniques de décomposition permettent une estimation plus aisée des différentes composantes du vecteur s.

Un autre objet de l'invention est un dispositif de traitement d'interférences affectant N signaux respectivement émis par N terminaux appartenant à un réseau de communication, lesdits N signaux émis formant les composantes d'un vecteur s, ledit dispositif comprenant des moyens d'estimation des composantes du vecteur s destinés à mettre en oeuvre au moins une première étape d'estimation au cours de laquelle au moins une composante du vecteur s est estimée en fonction d'au moins une autre composante du vecteur s estimée préalablement.

Un tel dispositif comprend en outre :

- des moyens de changement d'une base vectorielle dans laquelle est exprimé le vecteur s, préalablement à au moins une deuxième étape d'estimation des composantes du vecteur s,
- des moyens de sélection d'au moins une composante du vecteur s estimée au cours de l'une desdites étapes d'estimation ;
- des moyens de reconstitution du vecteur s traité à partir desdites composantes sélectionnées.

L'invention concerne également un programme d'ordinateur, caractérisé en ce qu'il comprend des instructions de code de programme pour la mise en oeuvre des étapes du procédé décrit précédemment lorsque le programme est exécuté par un processeur.

Le dispositif de reconstitution est, de façon optionnelle, intégré à un multiplexeur de signaux, notamment un multiplexeur DSLAM.

Un autre objet de l'invention est un programme d'ordinateur apte à commander la mise en oeuvre d'un procédé selon l'invention.

L'invention sera mieux comprise à la lecture de la description qui va suivre, donnée uniquement à titre d'exemple et faite en se référant aux dessins dans lesquels :

- la figure 1 représente un système de transmission comprenant un dispositif de reconstitution selon un mode de réalisation de l'invention,
- la figure 2 est un diagramme représentant un procédé de reconstitution selon un mode de réalisation de l'invention,
- la figure 3 est un autre diagramme représentant le procédé de reconstitution de la figure 2,
- la figure 4 est un diagramme représentant un procédé selon un autre mode de réalisation de l'invention,
- la figure 5 est un autre diagramme représentant le procédé de reconstitution de la figure 4.

### *Premier mode de réalisation:*

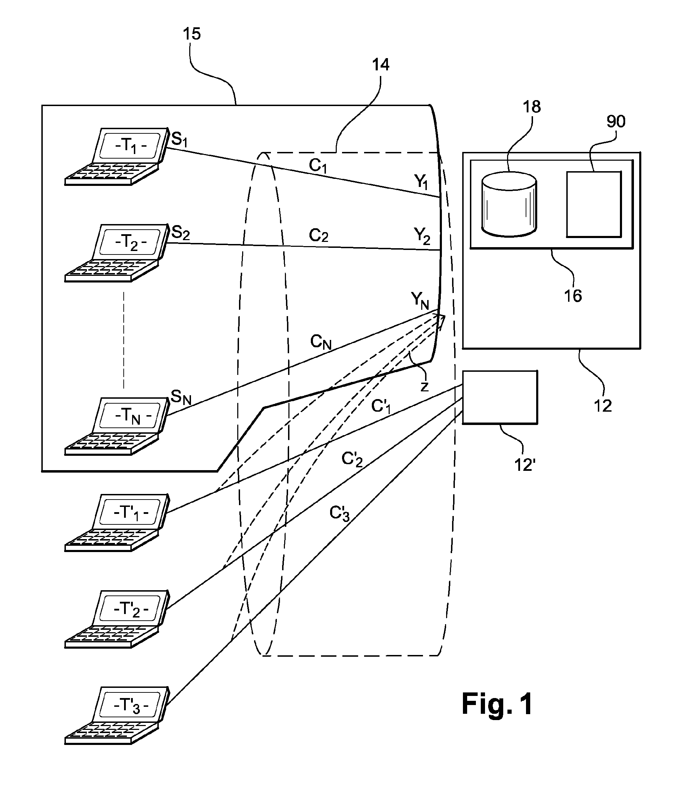

On a représenté sur la figure 1 des terminaux $T_1$, $T_2$, ..., $T_N$, $T_{1'}$, $T_{2'}$, ....$T_{M'}$, N ≠ M formés par exemple par les modems des utilisateurs. Les terminaux $T_1$ à $T_N$ sont gérés par un premier opérateur de télécommunications. Les terminaux $T_{1'}$, $T_{2'}$ et $T_{M'}$ sont gérés par un deuxième opérateur de télécommunications distinct du premier opérateur. Chaque terminal $T_1$, ..., $T_N$ est relié à un multiplexeur DSLAM 12 commun à ces terminaux par l'intermédiaire de lignes actives respectives $C_1$, $C_2$,..., $C_N$. Les terminaux $T_{1'}$ à $T_{M'}$ sont reliés à un autre multiplexeur DSLAM 12' qui leur est commun, par l'intermédiaire de lignes actives $C_{1'}$, $C_{2'}$, $C_{M'}$. Toutes les lignes actives $C_1$, ..., $C_N$, $C_{1'}$, ...,$C_{M'}$ sont localisées dans un même câble 14 et correspondent chacune à une paire de fils de cuivre constitutive du câble 14. Ces lignes actives permettent notamment de transmettre des signaux DSL émis par chaque terminal vers le multiplexeur 12, 12' concerné.

Les terminaux $T_1$, ..., $T_N$ et les lignes actives $C_1$, ..., $C_N$ associées et le multiplexeur 12 forment un premier système de transmission 15 géré par le premier opérateur.

Le multiplexeur DSLAM 12 comprend un dispositif 16 de traitement des interférences affectant des signaux $S_1$, ..., $S_N$, émis par les terminaux respectifs $T_1$, ..., $T_N$ à partir des signaux reçus $y_1$, ..., $y_N$, par le multiplexeur 12. Ce dispositif 16 comprend une carte préprogrammée intégrée dans le DSLAM comportant une mémoire 18 formant moyen de stockage d'un programme d'ordinateur permettant de mettre en oeuvre un procédé décrit par la suite, et des moyens 20 permettant de commander l'exécution du programme d'ordinateur, ces moyens comprenant notamment un processeur.

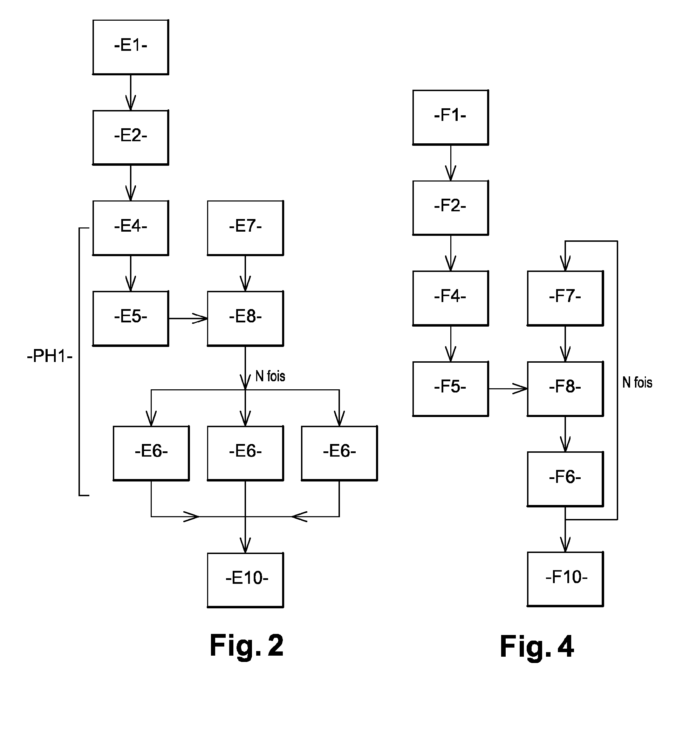

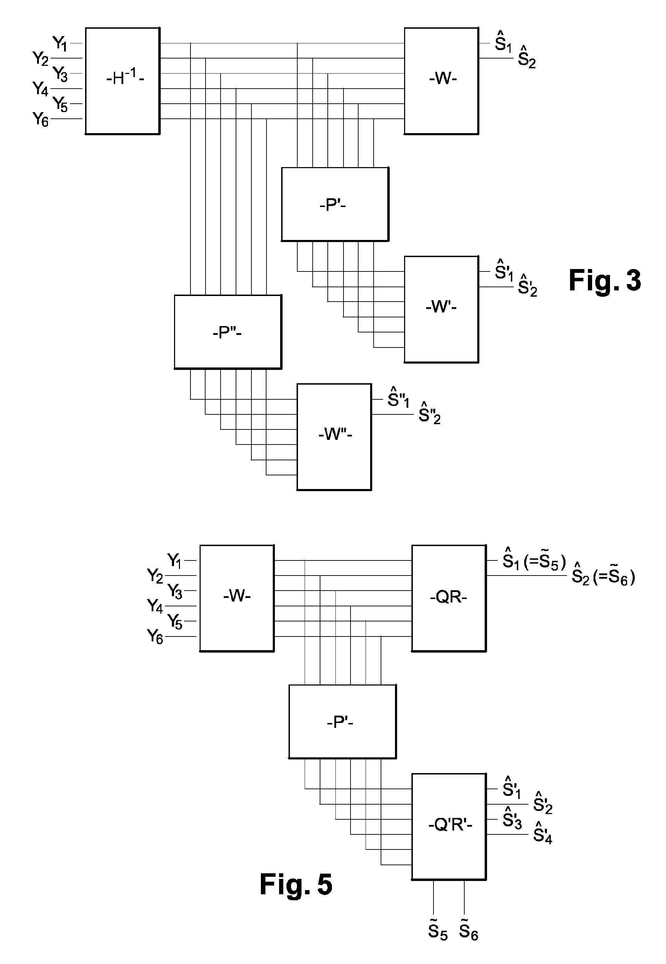

Nous allons maintenant décrire, en référence aux figures 2 et 3, un procédé de reconstitution selon un premier mode de réalisation de l'invention.

Ce procédé fait suite à la réception par le multiplexeur DSLAM 12 de signaux émis par les terminaux $T_1$...., $T_N$, transmis par les lignes actives $C_1$, ..., $C_N$. Les signaux reçus par le multiplexeur 12, ne sont pas semblables aux signaux émis par les terminaux $T_1$, ..., $T_N$, car ils ont été perturbés lors de leur transmission, notamment par des signaux z émis par les terminaux $T_{1'}$,.... $T_{M'}$ externes au système. Ce procédé permet de reconstituer des signaux proches des signaux émis par les terminaux $T_1$, ..., $T_N$, pour éviter toute perte de débit dans les lignes actives $C_1$, ..., $C_N$.

Le procédé comprend une première étape E1 de réception par le multiplexeur DSLAM 12 des différents signaux émis par les terminaux $T_1$, ..., $T_N$.

Les signaux reçus étant exprimés de la façon suivante:

$$y = Hs + Az + n \qquad (1)$$

Dans cette formule :

- s est un vecteur représentant les signaux émis par les différents terminaux appartenant au système,
- $H$ est la matrice de réponse du système,
- $A$ est une matrice représentant le couplage des signaux émis par des terminaux externes au système avec les signaux émis par des terminaux du système,
- $z$ est un vecteur représentant les signaux émis par les terminaux $T_{1'}$, ... $T_{M'}$ externes au système et
- $n$ est un vecteur représentant le bruit inhérent au système.

L'expression du signal reçu $y$ dans la formule (1) est fréquentielle, c'est-à-dire qu'un signal reçu est exprimé pour chaque fréquence porteuse f des signaux émis. Le procédé est décrit pour une fréquence porteuse donnée, c'est pourquoi, afin de simplifier les notations, l'indice f est supprimé.

Chacun des N signaux émis par les terminaux $T_1$, ..., $T_N$ est représenté par un vecteur de référence. Chacun de ces vecteurs de référence correspond, par conséquent à une ligne active du système. L'ensemble de ces N vecteurs de référence constitue une base vectorielle de référence $B_R$ dans laquelle sont exprimés notamment le vecteur s représentant les signaux émis par les différents terminaux $T_1$ à $T_N$ et le vecteur y représentant les signaux reçus par le multiplexeur DSLAM 12.

Ainsi, lorsque le vecteur s représentant les signaux émis par les terminaux $T_1$ à $T_N$ est exprimé dans la base vectorielle de référence $B_R$, chacune des N composantes de ce vecteur s correspond au signal émis par un terminal $T_i$. Il en est de même pour le vecteur de signaux reçus y, chaque coordonnée du vecteur y correspond à un signal reçu particulier et donc à la ligne active du système correspondante.

On considère que le multiplexeur DSLAM 12 connaît la matrice de corrélation spatiale du bruit $R_{n', n'}$ présent sur les différentes lignes actives du système.

Cette matrice $R_{n', n'}$ a pour expression :

$$R_{n',n'} = AA^H \xi_z + \xi_n I$$

Le procédé comprend une étape E2 de calcul de l'inverse $G^{-1}$ de la matrice G issue de la décomposition de Cholesky de la matrice $R_{n',n'}$ de corrélation spatiale du bruit. Lors d'une étape E3, le vecteur des signaux reçus $y$ est multiplié par la matrice $G^{-1}$.

Le vecteur des signaux traités s'exprime alors de la façon suivante :

$$\hat{y} = G^{-1}y = Wy$$

$$\hat{y} = \hat{H}s + \hat{n} \qquad (6)$$

avec :

- $\hat{H} = WH$, $\hat{H}$ étant appelée matrice de système équivalente et W étant l'inverse de la matrice G
- $\hat{n} = W(Az + n)$ représente une combinaison des bruits internet et externe au système

Le procédé comprend une étape E4 de décomposition de la matrice $\hat{H}$ en un produit d'une matrice triangulaire supérieure $R$ et d'une matrice unitaire $Q$, de sorte que :

$$\hat{H} = QR$$

$$\hat{y} = QRs + \hat{n}$$

Une matrice triangulaire supérieure est une matrice dans laquelle tous les coefficients situés au dessus de la diagonale de la matrice, ainsi que les coefficients diagonaux sont non nuls. Dans une matrice triangulaire supérieure, les coefficients situés au dessous de la diagonale de la matrice sont nuls.

Le procédé comprend ensuite une étape E5 de multiplication du vecteur $\hat{y}$ par la matrice transconjugée de la matrice $Q$ :

$$\tilde{y} = Q^H \hat{y} = Rs + Q^H \hat{n}$$

Le procédé comprend ensuite une étape E6 d'estimations successives de chaque signal $s_1$, $s_2$, ..., $s_k$, ..., $s_N$ émis par les terminaux $T_1$ à $T_N$. Lors de cette étape, on calcule une estimation $\hat{s}$ de chaque coordonnée du vecteur s de la façon suivante :

$$\hat{s}_i = \frac{1}{r_{i,i}} \left( \tilde{y}_i - \sum_{k=i+1}^{N} r_{i,k} \hat{s}_k \right) \qquad (7)$$

L'étape E3 constitue une étape de blanchiment des bruits internes et externes au système et l'ensemble PH1 des étapes E4 à E6 permet l'estimation des signaux émis par chaque terminal.

Le procédé comprend également une étape E7 de détermination d'une ou plusieurs bases vectorielles dans lesquelles seront également exprimés les signaux reçus. Ces bases vectorielles sont choisies en fonction de paramètres relatifs à la qualité de service (QoS) demandée par chaque terminal. Ces paramètres comprennent notamment un paramètre relatif au débit demandé, en fonction, par exemple, de l'abonnement souscrit, et/ou un paramètre relatif à l'état de la file d'attente de chaque terminal, de façon à effectuer une meilleure estimation du signal émis par le terminal qui a le plus d'informations à transmettre, et/ou un paramètre relatif à l'état de chaque ligne active, de façon à effectuer une meilleure estimation pour une ligne active ayant la plus forte atténuation ou subissant le plus l'impact du bruit externe.

Dans un mode de réalisation particulier du procédé objet de l'invention, le dispositif 16 applique, au cours de l'étape E7, une fonction de permutation $P_i$, déterminée en fonction des paramètres énumérés ci-dessus, aux vecteurs de la base de référence $B_R$ de façon à obtenir une ou plusieurs bases $B^{(i)}$ dans lesquelles, pour un vecteur X donné, exprimé dans la base $B_R$, le vecteur $X_i$ correspondant, exprimé dans la base $B^{(i)}$ est tel que $X_i = P_i \times X$.

Dans chaque base $B^{(i)}$, les vecteurs de référence de la base $B_R$ ne changent pas, seul l'ordre de ces vecteurs dans la famille formée par la base est modifié.

Pour une matrice M exprimée dans la base de référence $B_R$ (par exemple, les matrices *H* ou *W*), la matrice correspondante $M_i$ exprimée dans la base $B^{(i)}$ sera la suivante :

$$M_i = P_i \times M \times P_i^T,$$

du fait des formules classiques et des propriétés des matrices de permutation.

Dans la suite, on considère que N = 6, que tous les terminaux $T_1$, ...$T_N$ demandent une qualité de service identique et que les estimations dans la base de référence permettent d'obtenir une qualité de service suffisante seulement pour les signaux émis par deux terminaux, $T_1$ et $T_2$.

Pour que les qualités de service soient conformes à celles demandées, on détermine deux bases distinctes de la base $B_R$, les bases B' et B", dans lesquelles les signaux émis sont exprimés comme suit :

$$s' = \begin{pmatrix} s'_1 \\ s'_2 \\ s'_3 \\ s'_4 \\ s'_5 \\ s'_6 \end{pmatrix}_{B'} = \begin{pmatrix} s_3 \\ s_4 \\ s_5 \\ s_6 \\ s_1 \\ s_2 \end{pmatrix}_{B'} \quad \text{ce qui signifie que} \quad P' = \begin{pmatrix} 0 & 0 & 1 & 0 & 0 & 0 \\ 0 & 0 & 0 & 1 & 0 & 0 \\ 0 & 0 & 0 & 0 & 1 & 0 \\ 0 & 0 & 0 & 0 & 0 & 1 \\ 1 & 0 & 0 & 0 & 0 & 0 \\ 0 & 1 & 0 & 0 & 0 & 0 \end{pmatrix}$$

et

$$s'' = \begin{pmatrix} s''_1 \\ s''_2 \\ s''_3 \\ s''_4 \\ s''_5 \\ s''_6 \end{pmatrix}_{B''} = \begin{pmatrix} s_5 \\ s_6 \\ s_1 \\ s_2 \\ s_3 \\ s_4 \end{pmatrix}_{B''} \quad \text{ce qui signifie que} \quad P'' = \begin{pmatrix} 0 & 0 & 0 & 0 & 1 & 0 \\ 0 & 0 & 0 & 0 & 0 & 1 \\ 1 & 0 & 0 & 0 & 0 & 0 \\ 0 & 1 & 0 & 0 & 0 & 0 \\ 0 & 0 & 1 & 0 & 0 & 0 \\ 0 & 0 & 0 & 1 & 0 & 0 \end{pmatrix}$$

Le procédé comprend ensuite une étape E8 d'expression dans la base vectorielle B' et dans la base vectorielle B'', à l'aide des matrices de changement de base vectorielle déterminées lors de l'étape E7, des signaux reçus.

Au cours d'une étape E9, l'ensemble d'étapes PH1 d'estimation des signaux émis est alors reproduit dans chacune des bases vectorielles B' et B''.

L'ensemble des étapes E1 à E9 constitue un mode de réalisation du procédé objet de l'invention dit mode parallèle. En effet, dans un tel mode de réalisation, l'estimation de chaque coordonnée du vecteur s représentant les signaux émis exprimé dans une première base vectorielle par exemple la base vectorielle B', se fait indépendamment de l'estimation des mêmes composantes du vecteur s représentant les signaux émis exprimé dans une deuxième base vectorielle, par exemple la base vectorielle B''. On obtient alors deux estimations du vecteur s représentant les signaux émis dans deux bases vectorielles distinctes.

Suite à ces étapes E1 à E9, le procédé objet de l'invention comprend, pour chaque base vectorielle, une étape E10 de sélection des composantes estimées, ou signaux estimés, du vecteur s représentant les signaux émis. Ici les composantes estimées sont celles dont l'indice dans la base vectorielle considérée sont les plus petits. Par exemple, les signaux estimés pour lesquels on obtient une estimation satisfaisante sont, dans la base B', les signaux estimés $\hat{s}'_1$ et $\hat{s}'_2$ (correspondant aux signaux estimés $\hat{s}_3$ et $\hat{s}_4$ de la base de référence $B_R$) qui ont été estimés en fonction des estimations des signaux $\hat{s}'_6, \hat{s}'_5, \hat{s}'_4, \hat{s}'_3$ pour le signal $\hat{s}'_3$ et $\hat{s}'_6, \hat{s}'_5, \hat{s}'_4, \hat{s}'_3, \hat{s}'_2$ pour le signal $\hat{s}'_1$. Dans la base B'' les signaux estimés pour lesquels on obtient une estimation satisfaisante sont les signaux estimés $\hat{s}''_1$ et $\hat{s}''_2$ (correspondant aux signaux $s_5$ et $s_6$ de la base de référence $B_R$). Lors de cette étape, on obtient donc le vecteur des signaux émis estimés suivant, exprimé dans la base de référence :

$$\hat{s} = \begin{pmatrix} \hat{s}_1 \\ \hat{s}_2 \\ \hat{s}'_1 \\ \hat{s}'_2 \\ \hat{s}''_1 \\ \hat{s}''_2 \end{pmatrix}_{B_R}$$

Grâce au procédé selon l'invention, il est donc possible d'obtenir des estimations satisfaisantes pour tous les signaux émis.

Une autre mode de réalisation du procédé objet de l'invention, dit mode série, va maintenant être décrit en référence aux figures 4 et 5.

Le procédé comprend une première étape F1 de réception par le multiplexeur DSLAM 12 des différents signaux émis par les terminaux $T_1$, ..., $T_N$.

Les signaux reçus étant exprimés de la façon suivante :

$$y = Hs + Az + n \qquad (1)$$

On considère que le multiplexeur DSLAM 12 connaît la matrice de corrélation spatiale du bruit $R_{n', n'}$.

Cette matrice $R_{n', n'}$ à pour expression :

$$R_{n',n'} = AA^H \xi_z + \xi_n I$$

Le procédé comprend une étape F2 de décomposition de Cholesky de la matrice $R_{n',n'}$ de corrélation spatiale de bruit des signaux reçus, suivie d'une étape F3 de multiplication du vecteur des signaux reçus $y$ la matrice $G^{-1}$. Le vecteur des signaux traités s'exprime alors de la façon suivante :

$$\hat{y} = G^{-1} y = Wy$$

$$\hat{y} = \hat{H}s + \hat{n} \qquad (6)$$

avec :

- $\hat{H} = WH$ $\hat{H}$ étant appelée matrice de système équivalente et W étant l'inverse de la matrice G
- $\hat{n} = W(Az + n)$ représente le bruit une combinaison des bruits internet et externe au système.

Le procédé comprend ensuite une étape F4 de décomposition de la matrice $\hat{H}$ en un produit d'une matrice triangulaire supérieure R et d'une matrice unitaire $Q$, de sorte que :

$$\hat{H} = QR$$

$$\hat{y} = QRs + \hat{n}$$

Le procédé comprend ensuite une étape F5 de multiplication des signaux $\hat{y}$ par la matrice transconjugée de la matrice $Q$:

$$\tilde{y} = Q^H \hat{y} = Rs + Q^H \hat{n}$$

Le procédé comprend ensuite une étape F6 d'estimations successives de chaque signal $s_1$, $s_2$, ...,$s_k$,..., $s_N$ émis par les terminaux $T_1$ à $T_N$. Lors de cette étape, on calcule une estimation $\hat{s}$ de chaque coordonnée du vecteur s de la façon suivante :

$$\hat{s}_i = \frac{1}{r_{i,i}}\left(\widetilde{y}_i - \sum_{k=i+1}^{N} r_{i,k}\hat{s}_k\right) \tag{7}$$

Le procédé comprend également une étape F7 de détermination d'une ou plusieurs bases vectorielles, dans lesquelles seront également exprimés les signaux reçus y à partir d'un ou plusieurs critères mentionnés plus haut.

Le procédé comprend ensuite une étape F8 d'expression dans la base vectorielle B', à l'aide de la matrice de changement de base vectorielle déterminée lors de l'étape F7, des signaux reçus y.

Cette étape est semblable à l'étape E8.

Tout comme dans le premier mode de réalisation décrit précédemment, on considère que N = 6, que tous les terminaux $T_1, ...T_N$ demandent une qualité de service identique et que les estimations dans la base de référence permettent d'obtenir une qualité de service suffisante seulement pour les signaux émis par deux terminaux, $T_1$ et $T_2$.

Ainsi, l'estimation des signaux dans la base de référence $B_R$ est satisfaisante pour les signaux $\hat{s}_1$ et $\hat{s}_2$.

Le procédé comprend ensuite une étape F9 d'estimations successives de chaque signal $s_1, s_2, ...,s_k,..., s_N$ émis par les terminaux $T_1$ à $T_N$ dans la base B'. Lors de cette étape, on calcule une estimation $\hat{s}$ de chaque coordonnée du vecteur s de la façon suivante :

$$\hat{s}_i^{(p)} = \frac{1}{r_{i,i}^{(p)}}\left(\widetilde{y}_i^{(p)} - \sum_{k=i+1}^{N-Kp} r_{i,k}^{(p)}\hat{s}_k^{(p)} - \sum_{k=N-Kp+1}^{N} r_{i,k}^{(p)}\widetilde{s}_k^{(p)}\right)$$

$$\text{avec } \widetilde{s}_k^{(p)} = \hat{s}_{\Phi_p\left(\Phi_{p-1}^{-1}(k)\right)}^{(p-1)}$$

où :

- $\hat{s}_i^{(p)}$ est la valeur estimée du signal associé à la $i^{\text{ème}}$ coordonnée du vecteur s dans la base $B^{(p)}$ issue de la $p^{\text{éme}}$ permutation de la base de référence (par exemple $B^{(1)} = B'$),

- $\widetilde{y}_i^{(p)}$ est la ième coordonnée du vecteur associé au signal reçu et traité dans la base $B^{(p)}$,

- $r_{i,k}^{(p)}$ est la coordonnée associée à la ième ligne et la kème colonne de la matrice R dans la base $B^{(P)}$,

- K est le nombre de terminaux pour lesquels chaque permutation est jugée satisfaisante (dans l'exemple précédent, K=2), et

- $\Phi_p(j)$ est la valeur de $j$ permuté à l'aide de la $p^{\text{ème}}$ permutation (dans l'exemple donné plus haut

$$\widetilde{s}'_5 = \hat{s}_{\Phi_1\left(\Phi_0^{-1}(5)\right)} = \hat{s}_{\Phi_1(5)} = \hat{s}_1 ).$$

Ainsi, par exemple, dans la base vectorielle B' les composantes $\hat{s}'_5$ et $\hat{s}'_6$ sont remplacées par les composantes estimées $\hat{s}_1$ et $\hat{s}_2$ correspondantes. En effet, s'$_5$ = s$_1$ et s'$_6$ = s$_2$ au vu des relations entre les bases $B_R$ et B'. Il n'est alors pas nécessaire d'estimer ces deux composantes.

Ainsi, les autres signaux $\hat{s}'_1, \hat{s}'_2, \hat{s}'_3, \hat{s}'_4$ sont estimés dans la base B' en fonction de valeurs de signaux estimés dans la base $B_R$ selon la formule :

$$\hat{s}_i = \frac{1}{r_{i,i}}(\widetilde{y}_k - \sum_{k=i+1}^{4} r_{i,k}\hat{s}_k - r_{i,5}\hat{s}_1 - r_{i,6}\hat{s}_2) \qquad (8)$$

Dans ce contexte, l'estimation des signaux est plus précise et l'estimation des signaux $\hat{s}'_1, \hat{s}'_2, \hat{s}'_3$ correspondant aux terminaux $T_3$, $T_4$ et $T_5$ est suffisante pour ces terminaux demandant une qualité de service identique à celle des terminaux $T_1$ et $T_2$. En outre, dans cet exemple, le terminal $T_6$ demande une qualité de service moins élevée que celles des autres terminaux et l'estimation dans la base B' s'avère également suffisante pour le signal $\hat{s}'_4$ correspondant au signal $s_6$ émis par le terminal $T_6$.

L'étape F9 décrite ci-dessus est appliquée successivement à toutes les bases de permutation choisies jusqu'à obtention d'une estimation suffisante de toutes les lignes actives du système. Au fur et à mesure des estimations successives, des composantes du vecteur s représentant les signaux émis exprimé dans une base vectorielle donnée sont remplacées par des estimations de ces mêmes composantes obtenues lors d'une précédente estimation. On obtient ainsi une estimation satisfaisante pour toutes les composantes du vecteur s représentant les signaux émis.

Le procédé comprend ensuite une étape F10 de sélection des composantes du vecteur s représentant les signaux émis estimées. Le vecteur des signaux émis estimés dans la base de référence $B_R$ est exprimé, pour l'exemple cité, lors de cette étape de la façon suivante :

$$\hat{s} = \begin{pmatrix} \hat{s}_1 \\ \hat{s}_2 \\ \hat{s}'_1 \\ \hat{s}'_2 \\ \hat{s}'_3 \\ \hat{s}'_4 \end{pmatrix}_{B_R}$$

On notera que l'invention n'est pas limitée aux modes de réalisation précédemment décrits.

En variante, le remplacement des composantes estimées des signaux émis exprimés dans la base B' par les composantes estimées des signaux émis exprimés dans la base B est optionnel.

En outre, le procédé est modulable en fonction du nombre de terminaux du système et du nombre ou de la nature des paramètres relatifs à la qualité de service demandée par chaque terminal.

Par exemple, si l'estimation dans la base de référence s'avère suffisante pour un seul terminal, désigné premier terminal, et que tous les terminaux ont des paramètres de qualité de service identiques, il est préférable de déterminer autant de bases vectorielles que de terminaux.

De même, les critères de détermination des paramètres à considérer pour déterminer la ou les permutations à effectuer peuvent varier. Dans le deuxième mode de réalisation, si on considère le paramètre d'état d'une ligne active, on détermine les lignes actives les plus sensibles au bruit en calculant la somme des modules carrés des termes de chaque colonne de la matrice équivalente $\hat{H}$ du système, les termes les plus faibles correspondant aux lignes actives les plus sensibles au bruit.

En outre, les traitements appliqués au vecteur y représentant les signaux reçus ne sont pas limités aux traitements décrits. D'autres traitements connus peuvent être appliquées au vecteur $\hat{y}$ en vue de la réduction de l'influence des interférences entre le système et les perturbateurs externes. Un tel traitement peut par exemple comprendre une étape d'inversion de la matrice racine carrée de la matrice de corrélation spatiale du bruit.

De même, le traitement en vue de l'élimination des interférences internes n'est pas limité aux traitements décrits.

En outre, les bases vectorielles choisies peuvent être liées par des relations autres que des relations de permutation.

Enfin, le système n'est pas limité à un câble à paire de fils de cuivre.

### *Deuxième mode de réalisation:*

Un autre mode de réalisation de l'invention va maintenant être décrit Ce mode de réalisation du procédé objet de l'invention diffère de ceux précédemment décrit au niveau des étapes de blanchiment et d'estimation des signaux émis.

Dans ce mode de réalisation, le procédé comprend une étape G1 de multiplication du vecteur de signaux reçus *y* par la matrice $H^{-1}$, inverse de la matrice de réponse du système, de sorte que le vecteur des signaux reçus et traités après l'étape G1 s'exprime de la façon suivante :

$$\hat{y} = H^{-1}y = s + \tilde{n} \quad (2)$$

$$\text{où} \quad \tilde{n} = H^{-1}n' = H^{-1}(Az + n)$$

Cette étape correspond à une étape de traitement du signal reçu en vue d'éliminer les interférences internes au système.

On considère que le multiplexeur DSLAM 12 connaît la matrice de corrélation spatiale du bruit $R_{n', n'}$.

Cette matrice $R_{n',n'}$ a pour expression :

$$R_{\tilde{n},\tilde{n}} = \tilde{A}\tilde{A}^{H}\xi_{z} + \xi_{n}I \quad (3)$$

Dans cette formule :

- $\tilde{A}^{H}$ est le transconjugué de $\tilde{A}$, c'est-à-dire la transposée de cette matrice dans laquelle les nombres complexes ont été remplacés par leurs conjugués,
- *I* est la matrice identité, et
- $\zeta_{z}$ et $\zeta_{n}$ sont les puissances respectives des signaux z externes au système et du bruit blanc *n*.

Et la matrice de corrélation du bruit $R_{\tilde{n},\tilde{n}}$ a pour expression

$$R_{\tilde{n},\tilde{n}} = H^{-1}R_{n',n'}H^{-H}$$

Le procédé comprend ensuite une étape G2 de décomposition de Cholesky de la matrice de corrélation spatiale du bruit. Lors de cette étape, le dispositif 16 décompose la matrice de corrélation spatiale du bruit en un produit de deux matrices selon la formule :

$$R_{\tilde{n},\tilde{n}} = G \times G^{H}$$

dans laquelle *G* est une matrice triangulaire supérieure et $G^{H}$ son transconjugué. Cette décomposition est effectuée de façon classique.

Le procédé comprend ensuite une étape G3, lors de laquelle un filtre est appliqué au vecteur $\hat{y}$ représentant les signaux traités lors de l'étape G2 en multipliant ce vecteur par une matrice $W = G^{-1}$.

Ainsi,

$$\tilde{y} = W\hat{y} = Ws + W\tilde{n} \quad (4)$$

Cette opération permet de décorréler la combinaison des bruits interne et externe au système et correspond à une étape de traitement des signaux $\hat{y}$ traités en vue de réduire l'influences des perturbateurs externes sur les lignes actives du système, les perturbateurs externes correspondant notamment aux terminaux T'$_{1}$,..., T'$_{N}$.

Le procédé comprend ensuite une étape G4 d'estimation de chaque signal $s_{1}$, $s_{2}$, ...,$s_{k}$,..., $s_{N}$ émis par les terminaux T$_{1}$ à T$_{N}$ à partir de l'expression précédente. Comme la matrice *W* est l'inverse d'une matrice triangulaire supérieure, *W* est une matrice triangulaire supérieure. D'où :

$$\hat{s}_i = \frac{1}{w_{i,i}} \left( \widetilde{y}_i - \sum_{k=i+1}^{N} w_{i,k} \hat{s}_k \right) \quad (5)$$

Ainsi, une valeur du signal émis par chaque terminal du système $T_1$, ..., $T_N$ peut être estimée en fonction d'une valeur du signal reçu correspondant traité mathématiquement et, éventuellement, en fonction des valeurs estimées des signaux émis par d'autres terminaux du système.

L'étape G1 permet d'annuler les interférences internes au système, les étapes G2 à G3 forment un ensemble PH2 d'étapes de blanchiment du bruit, et l'étape G4 formant une étape d'estimation des signaux émis.

Dans ce mode de réalisation, le procédé objet de l'invention permet de réduire le nombre et la complexité des calculs à effectuer pour estimer les signaux émis. En effet, un tel procédé nécessite moins d'opérations mathématiques pour obtenir une estimation des signaux émis que la solution de l'état de l'art.

En variante, la première étape de traitement n'est pas limitée à une multiplication du vecteur des signaux reçus par l'inverse $H^{-1}$ de la matrice de réponse du système. On peut par exemple encore simplifier cette étape en décomposant la matrice de réponse du système H en une somme de deux matrices, de sorte que :

$$H=D+E$$

avec :

- D comprenant les termes diagonaux de H et des termes non diagonaux nuls,
- E comprenant les termes non diagonaux de H et des termes diagonaux nuls.

D'où :

$$H=D(I-D^{-1} E)$$

$D^{-1}$ E comprend des termes plus petits que 1, la matrice H ayant, du fait de ses propriétés classiques, des termes diagonaux d'ordre de grandeur plus élevés que les termes non diagonaux. $H^{-1}$ peut de ce fait être approximée de la façon suivante à l'aide d'une décomposition en série :

$$H^{-1} \approx \widetilde{H} = (I - D^{-1}E - (D^{-1}E)^2)D^{-1}$$

La matrice D étant une matrice diagonale, il est encore plus simple de calculer $D^{-1}$ que $H^{-1}$, Cette variante permet donc d'améliorer encore le temps de traitement de l'estimation.

L'étape d'estimation des signaux émis étant une estimation successive, il est possible d'améliorer celle-ci par application de la série d'étapes F8 à F9.

## Revendications

1. Procédé de traitement d'interférences affectant N signaux respectivement émis par N terminaux appartenant à un réseau de communication, lesdits N signaux émis formant les composantes d'un vecteur s, ledit procédé comprenant au moins une phase d'estimation des composantes du vecteur s, comprenant au moins une première étape d'estimation au cours de laquelle au moins une composante du vecteur s est estimée en fonction d'au moins une autre composante du vecteur s estimée préalablement,
   **caractérisé en ce que** ledit procédé comprend en outre:

   - au moins une étape de changement d'une base vectorielle dans laquelle est exprimé le vecteur s, préalablement à au moins une deuxième étape d'estimation des composantes du vecteur s,
- une étape de sélection d'au moins une composante du vecteur s estimée au cours de l'une desdites étapes d'estimation ;
- une étape de reconstitution du vecteur s traité à partir desdites composantes sélectionnées.

2. Procédé selon la revendication 1, dans lequel ladite deuxième étape d'estimation porte sur un vecteur s modifié dans lequel une desdites composantes a été remplacée par ladite composante correspondante sélectionnée.

3. Procédé selon la revendication 1, dans lequel lesdites bases vectorielles sont choisies en fonction de paramètres relatifs à une qualité de service demandée pour lesdits signaux émis.

4. Procédé selon la revendication 1, dans lequel une étape d'estimation desdites composantes comprend

- une première étape d'élimination des interférences internes au système affectant lesdites composantes, et
- une deuxième étape d'élimination des interférences entre le système et au moins un perturbateur externe affectant lesdites composantes.

5. Dispositif de traitement d'interférences affectant N signaux respectivement émis par N terminaux appartenant à un réseau de communication, lesdits N signaux émis formant les composantes d'un vecteur s, ledit dispositif comprenant des moyens d'estimation des composantes du vecteur s destinés à mettre en oeuvre au moins une première étape d'estimation au cours de laquelle au moins une composante du vecteur s est estimée en fonction d'au moins une autre composante du vecteur s estimée préalablement,
**caractérisé en ce que** ledit dispositif comprend en outre:

- des moyens de changement d'une base vectorielle dans laquelle est exprimé le vecteur s, préalablement à au moins une deuxième étape d'estimation des composantes du vecteur s,
- des moyens de sélection d'au moins une composante du vecteur s estimée au cours de l'une desdites étapes d'estimation ;
- des moyens de reconstitution du vecteur s traité à partir desdites composantes sélectionnées.

6. Programme d'ordinateur, **caractérisé en ce qu'**il comprend des instructions de code de programme pour la mise en oeuvre des étapes du procédé selon la revendication 1 lorsque le programme est exécuté par un processeur.

7. Support de données, **caractérisé en ce qu'**il comprend des moyens de stockage (18) d'un programme d'ordinateur selon la revendication précédente.

**Fig. 1**

-E1-

-E2-

-E4-  -E7-

-E5- → -E8-

-PH1-

N fois

-E6-  -E6-  -E6-

-E10-

## Fig. 2

-F1-

-F2-

-F4-  -F7-

-F5- → -F8-   N fois

-F6-

-F10-

## Fig. 4

Fig. 3

Fig. 5